# EUROPÄISCHE PATENTSCHRIFT

(11) **EP 3 301 043 B1**
(45) Veröffentlichungstag und Bekanntmachung des Hinweises auf die Patenterteilung: **29.01.2020**
(21) Anmeldenummer: 17182935.1
(22) Anmeldetag: 25.07.2017
(51) Int. Cl.: B65G 19/02, B65G 9/00

(54) **TRANSPORTTASCHE FÜR EINE HÄNGEFÖRDERANLAGE**
TRANSPORT BAG FOR OVERHEAD CONVEYOR SYSTEM
SAC DE TRANSPORT POUR CONVOYEUR SUSPENDU

(30) Priorität: 29.09.2016 DE 102016218879
(43) Veröffentlichungstag der Anmeldung: 04.04.2018
(73) Patentinhaber: Dürkopp Fördertechnik GmbH, 33719 Bielefeld (DE)
(72) Erfinder: Janzen, Paul, 33619 Bielefeld (DE); Wend, Michael, 33619 Bielefeld (DE)
(74) Vertreter: Rau, Schneck & Hübner Patentanwälte Rechtsanwälte PartGmbB

(56) Entgegenhaltungen:
- EP-A1- 3 028 961
- DE-A1-102004 018 569
- DE-A1-102012 018 925
- DE-U1- 9 312 749
- DE-U1- 29 915 385
- US-A1- 2015 036 952
- US-B1- 6 471 402

## Beschreibung

Die vorliegende Patentanmeldung nimmt die Priorität der deutschen Patentanmeldung 10 2016 218 879.8 in Anspruch, deren Inhalt durch Bezugnahme hierin aufgenommen wird.

Die Erfindung betrifft eine Transporttasche für eine Hängeförderanlage. Eine Transporttasche für eine Hängeförderanlage ist aus der DE 10 2008 026 720 A1 und aus der gattungsgemäßen DE 10 2012 018 925 A1 nach dem Oberbegriff des Anspruchs 1 bekannt. Die Transporttasche weist ein flexibles Taschenmaterial auf, sodass sich die Form der Tasche in Abhängigkeit von der darin befindlichen Ware verändert. In einem Staubereich einer Hängeförderanlage kann auf die gestauten Transporttaschen ein Staudruck wirken. Der Staudruck wird beispielsweise von einer Hangabtriebskraft im Staubereich oder von einem Staustreckenantrieb verursacht. Transporttaschen, die wegen der transportierten Waren ausgebeult sind, können quer zur Transportrichtung verrutschen und/oder verhaken.

Der Taschentransport mit der Hängeförderanlage ist fehleranfällig. Um ein Verrutschen der Transporttaschen infolge des Staudrucks zu vermeiden, ist aus DE 10 2010 053 590 A1 bekannt, Abstandshalter zwischen den einzelnen Transporttaschen vorzusehen, um einen definierten Mindestabstand zwischen benachbarten Transporttaschen entlang der Transportrichtung einzuhalten.

Es ist die Aufgabe der vorliegenden Erfindung, den Taschentransport zu verbessern und insbesondere ein seitliches Verrutschen der Transporttaschen und/oder ein unkontrolliertes Verhaken der Transporttaschen miteinander zu vermeiden.

Diese Aufgabe ist erfindungsgemäß gelöst durch eine Transporttasche mit dem in Anspruch 1 angegebenen Merkmalen.

Erfindungsgemäß wurde erkannt, dass ein seitliches Verlagern zwei aneinander liegender Transporttaschen dadurch verhindert werden kann, dass die Transporttaschen eine Haftkontaktfläche aufweisen. Die Haftkontaktfläche ist bereichsweise an einer Außenseite einer vorderen Seitenwand und/oder einer hinteren Seitenwand ausgebildet. Die Seitenwände sind insbesondere aus einem biegeschlaffen und/oder beulfähigen Material ausgeführt. Ein derartiges Material ist beispielsweise ein Textilgewebe oder Textilvlies. Insbesondere sind die Seitenwände nicht starr ausgeführt. Die Haftkontaktfläche der Transporttasche kann an der benachbarten Transporttasche, entweder unmittelbar am Taschenmaterial oder an einer Haftkontaktfläche der benachbarten Transporttasche, anliegen. Im Bereich der Haftkontaktfläche liegt die Transporttasche lösbar haftend an der benachbarten Transporttasche an. Die Haftkraft ist insbesondere größer als eine resultierende Verschiebekraft, die insbesondere quer und insbesondere senkrecht zu einer Förderrichtung der Hängeförderanlage orientiert ist. Die resultierende Verschiebekraft wird insbesondere durch den Staudruck verursacht. Im unbeladenen Zustand weist die Transporttasche im Wesentlichen eine Quaderform auf mit einer in Transportrichtung der Hängeförderanlage vorne orientierten vorderen Seitenwand, einer gegenüberliegenden hinteren Seitenwand und einer die vordere Seitenwand mit der hinteren Seitenwand verbindende Bodenwand.

Die erfindungsgemäße Transporttasche kann zuverlässig in einer Staustrecke angeordnet sein. Ein seitliches Verschieben der Transporttaschen infolge eines a priori unbekannten Staudrucks ist ausgeschlossen.

Erfindungsgemäß ist die Transporttasche lediglich bereichsweise mit der Haftkontaktfläche ausgebildet. Die Haftkontaktfläche ist insbesondere dort an der Transporttasche angeordnet, wo erwartungsgemäß aneinander liegende Transporttaschen sich kontaktieren, wenn die Transporttaschen im Staubereich der Hängeförderanlage gestaut werden. Es ist auch denkbar, dass sich die Haftkontaktfläche über die gesamte vordere Seitenwand und/oder die gesamte hintere Seitenwand und insbesondere über die gesamte Transporttasche erstreckt (nicht Teil der Erfindung). In diesem Fall könnte die Transporttasche einheitlich aus einem Material, das die Haftkontaktfläche bildet, hergestellt sein. Das einheitliche Material verhindert ein seitliches Verrutschen der Transporttaschen.

Erfindungsgemäß wurde erkannt, dass auf Abstandshalter gemäß der DE 10 2010 053 590 A1 verzichtet werden kann, wenn die Transporttaschen selbst derart ausgeführt sind, dass ein seitliches Verrutschen ausgeschlossen ist. Durch die Haftkontaktfläche ist ein stabiles Anordnen mehrerer Transporttaschen in einer Staustrecke im Wesentlichen unabhängig vom Staudruck möglich. Das Aufstauen der Transporttaschen ist mit reduziertem Aufwand zuverlässig möglich. Die Transporttaschen sind zuverlässig, fehlerunanfällig und unkompliziert entlang einer Staustrecke anordenbar.

Die erfindungsgemäße Ausgestaltung der Haftkontaktfläche mit einem Reibbelag aus einem Reibmaterial ermöglicht eine besonders zuverlässige Vermeidung des seitlichen Verschiebens. Aneinander anliegende Transporttaschen werden im Bereich der Haftkontaktfläche unmittelbar aneinander gehalten. Ein seitliches Ausweichen ist vermieden.

Die Ausgestaltung einer Transporttasche gemäß Anspruch 2 gewährleistet ein zuverlässiges Stauen der Transporttaschen in einem Staubereich. Insbesondere ist der Reibwert des Reibbelags höher als bei typischen Taschenmaterialen, die einen Reibwert von beispielsweise bis zu 0,4 aufweisen.

Der Reibbelag ist insbesondere aus Polyvinylchlorid (PVC), insbesondere aus Weich-PVC (PVC-P) hergestellt. Als Reibwert im Sinne der Anmeldung wird insbesondere der Gleitreibungskoeffizient für eine trockene, also nicht geschmierte Werkstoffpaarung, insbesondere des Materials für den Reibbelag gegenüber Stahl, verstanden. Dieser Wert beträgt für PVC beispielsweise 0,6. Für Gummimaterialien, die als Material für den Reibbelag grundsätzlich in Betracht kommen, kann der Reibkoeffizient, also der Reibwert, in Abhängigkeit von Geschwindigkeit und/oder Temperatur beispielsweise zwischen etwa 0,8 und 2,5 liegen. Ein typisches Gummimaterial ist beispielsweise Acrylnitril-Butadien (NBR). Als Material für den Reibbelag kommt beispielsweise auch Silikonkautschuk und/oder Acrylkautschuk in Betracht. Ein Reibwert, der größer ist als 1, ermöglicht eine besonders große Haftung.

Die Ausgestaltung der Transporttasche gemäß Anspruch 3 ermöglicht einen effizienten Einsatz des Reibmaterials. Der Reibbelag ist insbesondere an einer der Seitenwände aufgesetzt oder darin integriert.

Eine Transporttasche gemäß Anspruch 4 weist vorteilhafte Sicherheitseigenschaften, insbesondere hinsichtlich einer möglichen Brandgefahr, auf.

Die Ausgestaltung der Transporttasche gemäß Anspruch 5 ermöglicht ein mechanisches kontrolliertes Verbinden benachbarter Transporttaschen. Die Haftkontaktfläche weist insbesondere eine Oberflächenstrukturierung auf. Die Haftkontaktfläche weist insbesondere mindestens eine Erhebung und/oder eine Vertiefung auf. Die mindestens eine Vertiefung kann insbesondere durch einen zwischen den Erhebungen der Haftkontaktfläche gebildeten Zwischenraum ausgeführt sein. Insbesondere sind die Erhebungen rasterförmig an der Haftkontaktfläche angeordnet, sodass auch die dazwischen ausgebildeten Vertiefungen rasterförmig ausgebildet sind. Bei dem Anliegen benachbarter Transporttaschen können die Erhebungen der Haftkontaktfläche der einen Tasche in die Vertiefungen der Haftkontaktfläche der anderen Transporttasche eingreifen und dort eine mechanische, insbesondere durch Formschluss, Verbindung bilden und ein seitliches Verschieben der Transporttaschen verhindern. Die Erhebungen können beispielsweise pyramidenförmig, kegelförmig, quaderförmig und/oder zylinderförmig ausgeführt sein. Die Erhebungen und/oder Vertiefungen ermöglichen ein Verhaken ineinander. Die Haftung der Transporttaschen aneinander ist dadurch verbessert.

Anstelle einer Oberflächenstrukturierung mit einer Vielzahl von Erhebungen und Vertiefungen ist es auch möglich, nur einige wenige Erhebungen und/oder Vertiefungen, insbesondere genau eine Erhebung und/oder genau eine Vertiefung, an der Haftkontaktfläche vorzusehen. Die Erhebung kann beispielsweise als an der Haftkontaktfläche vorstehender Dorn ausgeführt sein, der in ein abgerundetes Langloch als Vertiefung der benachbarten Transporttasche als Gegenkontur eingreifen kann.

Das Anhaften benachbarter Transporttaschen ist verbessert, wenn Vertiefungen der Haftkontaktfläche der einen Transporttasche in mit korrespondierenden Erhebungen der Haftkontaktfläche der anderen Transporttasche unmittelbar zusammenwirken. Insbesondere sind Erhebungen und Vertiefungen an einer Haftkontaktfläche einer Transporttasche nebeneinander in einem, insbesondere regelmäßigen, Raster angeordnet. Vorteilhaft ist es, wenn die jeweiligen Rasterabstände von Erhebungen und Vertiefungen der korrespondierenden Haftkontaktflächen identisch ausgeführt sind. Weiterhin vorteilhaft ist es, wenn die jeweilige Kontur der Erhebungen mit der jeweiligen Kontur der korrespondierenden Vertiefungen zusammenwirkt. Dazu ist es vorteilhaft, wenn die Vertiefungen jeweils ein Negativ einer Erhebung darstellen.

Durch die Erhebungen und Vertiefungen wird die Oberfläche der Haftkontaktfläche vergrößert. Die vergrößerte Oberfläche ermöglicht eine verbesserte Haftung der benachbarten Transporttaschen aneinander. Die Haftkontaktfläche ermöglicht auch eine verbesserte Haftung, wenn die benachbarte Transporttasche ohne Erhebungen und/oder Vertiefungen ausgeführt ist. Insbesondere ist es möglich, dass die Erhebungen und/oder Vertiefungen der Haftkontaktfläche durch das Anlegen an der benachbarten Transporttasche elastisch deformiert werden. Ein seitliches Abrutschen infolge des Staudrucks ist verhindert.

Besonders vorteilhaft ist es, wenn an der Haftkontaktfläche ein Reibbelag aus einem Reibmaterial vorgesehen ist, wobei der Reibbelag Erhebungen und/oder Vertiefungen aufweist. Die Haftung ist zusätzlich verbessert. Die Haftkontaktfläche ermöglicht eine Haltekraft infolge von Kraftschluss durch Reibung und infolge von Formschluss durch Erhebungen und/oder Vertiefungen.

Eine Aussteifungsplatte gemäß Anspruch 6 gewährleistet eine zusätzliche mechanische Stabilisierung der Transporttasche. Dadurch, dass eine Aussteifungsplatte im Bereich der Haftkontaktfläche angeordnet ist, ist ein zuverlässiges Anliegen der Transporttaschen im Bereich der Haftkontaktflächen verbessert. Die Aussteifungsplatte gewährleistet eine im Wesentlichen definierte ebene Anlagefläche der Transporttasche, insbesondere unabhängig von der beladenen Ware.

Die Ausgestaltung der Transporttasche gemäß Anspruch 7 ermöglicht eine besonders robuste und kompakte Ausführung. Durch die mehrlagige Ausführung ist gewährleistet, dass die außen liegende Haftkontaktfläche durch die darunter liegende Aussteifungsplatte gestützt ist. Dadurch ist vermieden, dass sich die Haftkontaktfläche infolge der Beladung der Transporttasche undefiniert krümmt und/oder deformiert.

Eine Ausführung der Transporttasche gemäß Anspruch 8 gewährleistet eine Aussteifung der Haftkontaktfläche.

Eine Ausführung der Transporttasche gemäß Anspruch 9 ermöglicht eine besonders leichtbauende und kosteneffiziente Ausführung. Die Aussteifungsplatte kann beispielsweise aus Pappe oder Karton hergestellt sein. Die Aussteifungsplatte kann eine senkrecht zur Plattenebene orientierte Hohlkammer aufweisen. Die Hohlkammern können beispielsweise wabenförmig ausgeführt sein. Die Hohlkammern können auch eine andere Kontur, beispielsweise eine ringförmige oder rechteckige oder quadratische Kontur aufweisen. Die Aussteifungsplatte kann auch aus einem anderen Material beispielsweise Kunststoff und insbesondere aus Polypropylen hergestellt sein. Es ist auch denkbar, eine Aussteifungsplatte aus Metall, insbesondere aus Metallschaummaterial zu verwenden.

Eine Ausgestaltung der Transporttasche gemäß Anspruch 10 gewährleistet eine fehlerfreie Aussteifung der Haftkontaktfläche.

Eine Ausführung einer Transporttasche gemäß Anspruch 11 erhöht die Sicherheit der Förderung der Transporttaschen. Dadurch, dass eine vordere Haftkontaktfläche und eine hintere Haftkontaktfläche vorgesehen sind, können bei benachbarten Transporttaschen die jeweils vordere und hintere Kontaktfläche unmittelbar aneinander anliegen. Die Haftung der Transporttaschen aneinander und damit die Sicherheit gegen ein seitliches Verrutschen sind zusätzlich erhöht. Vorteilhaft ist es, wenn die Haftkontaktflächen identisch ausgeführt sind, wobei sich die Haftkontaktflächen bezüglich ihrer Maße und/oder ihrer Anordnung unterscheiden können. So kann es vorteilhaft sein, wenn die vordere Haftkontaktfläche an der vorderen Seitenwand näher der Bodenwand zugeordnet ist als die hintere Haftkontaktfläche, die mit der Haftkontaktfläche der nachfolgenden, infolge einer Steigung der Förderschiene im Staubereich höher angeordneten nachfolgenden Transporttasche in Kontakt ist.

Eine Transporttasche gemäß Anspruch 12 ermöglicht eine verbesserte und insbesondere lösbare Haftung der benachbarten Transporttaschen aneinander. Vorteilhaft ist beispielsweise ein Haftelement, das magnetisch und/oder als Klettverschluss ausgebildet ist.

Die Ausführung der Transporttasche gemäß Anspruch 13 ermöglicht eine vorteilhafte Aufhängung an einer Förderschiene der Hängeförderanlage.

Eine Ausführung der Transporttasche gemäß Anspruch 14 ermöglicht eine unmittelbare Kopplung der Transporttasche an der Hängeförderanlage. Weitere Vorteile, zusätzliche Merkmale und Einzelheiten der Erfindung ergeben sich aus der nachfolgenden Beschreibung eines Ausführungsbeispiels anhand der Zeichnung. Es zeigen:
- Fig. 1: eine perspektivische Ansicht einer Staustrecke einer Hängeförderanlage mit mehreren gestauten Transporttaschen,
- Fig. 2: eine Draufsicht auf die Staustrecke gemäß Fig. 1,
- Fig. 3: eine perspektivische Darstellung einer erfindungsgemäßen Transporttasche,
- Fig. 4: eine Ansicht der Transporttasche gemäß Fig. 3 von vorne,
- Fig. 5: eine Ansicht der Transporttasche gemäß Fig. 3 von hinten,
- Fig. 6: eine Seitenansicht der unbeladenen Transporttasche gemäß Fig. 3,
- Fig. 7: eine perspektivische Detailansicht eines Reibbelags der Haftkontaktfläche der Transporttasche gemäß Fig. 3 und
- Fig. 8: eine vergrößerte Detailansicht aneinander anliegend angeordneter Haftkontaktflächen benachbarter Transporttaschen gemäß Fig. 1.

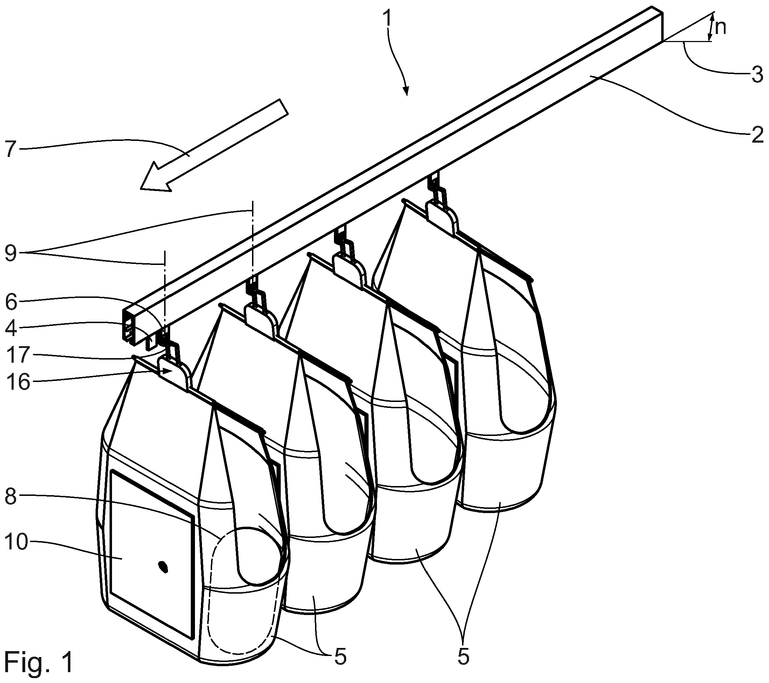

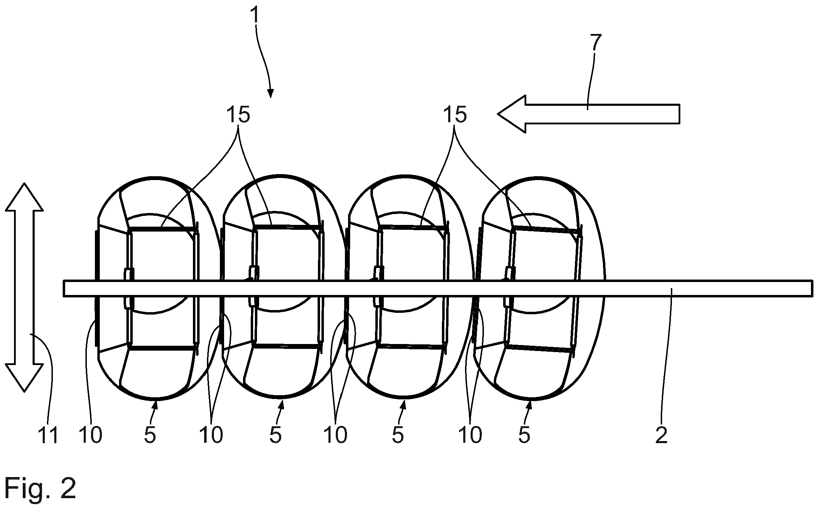

Eine in Fig. 1 und 2 gezeigte Staustrecke 1 ist Teil einer Hängeförderanlage. Die Staustrecke 1 weist eine obere Förderschiene 2 auf, die gegenüber der Horizontalen 3 mit einem Neigungswinkel n geneigt angeordnet ist.

Die Staustrecke 1 weist ein schaltbares Stopperelement 4 auf, um Transporttaschen 5, die entlang der Förderschiene 2 transportiert werden, zu stoppen. Die Transporttaschen 5 sind jeweils an einem Adapterelement 6 entlang der Förderschiene 2 geführt transportierbar. Die Förderschiene 2 gibt eine Transportrichtung 7 vor.

In den Transporttaschen 5 sind jeweils Transportwaren 8 angeordnet. Die Transportwaren 8 haben insbesondere unterschiedliche Größen. Insbesondere haben die Transportwaren 8 eine entlang der Transportrichtung 7 orientierte Dicke, die größer ist als die Ausgangsdicke der Transporttasche 5 im unbeladenen Zustand. Durch das Beladen mit den Transportwaren 8 verändert sich die äußere Kontur der Transporttasche 5 gegenüber dem unbeladenen Zustand. Im beladenen Zustand weist die Transporttasche 5 eine deformierte, insbesondere ausgebeulte Form auf.

Im Bereich der Staustrecke 1 sind die Transporttaschen 5 mit den Adapterelementen 6 im Wesentlichen gleich beabstandet an der Förderschiene 2 angeordnet. Der Abstand der Transporttaschen 5 ergibt sich unmittelbar aus deren Beladung. Bei einer Beladung der Transporttaschen 5 mit Transportwaren 8 unterschiedlicher Dicke entlang der Transportrichtung 7 können die Transporttaschen mit unterschiedlichen Abständen zueinander angeordnet sein. Der Abstand entspricht in etwa der Taschenbreite im beladenen Zustand. Aufgrund der ausgebeulten Form der Transporttaschen 5 liegen diese aneinander an. Insbesondere die weiter hinten angeordneten Transporttaschen 5 sind gegenüber der Vertikalen 9 im Wesentlichen ungeneigt angeordnet.

Die Transporttaschen 5 weisen jeweils 2 Haftkontaktflächen 10 auf. Die Haftkontaktflächen 10 zwei benachbart angeordneter Transporttaschen 5 liegen aneinander an. Dadurch wird verhindert, dass die Transporttaschen 5 infolge des Staudrucks entlang einer Querrichtung 11, die senkrecht zur Transportrichtung 7 orientiert ist, verschoben werden.

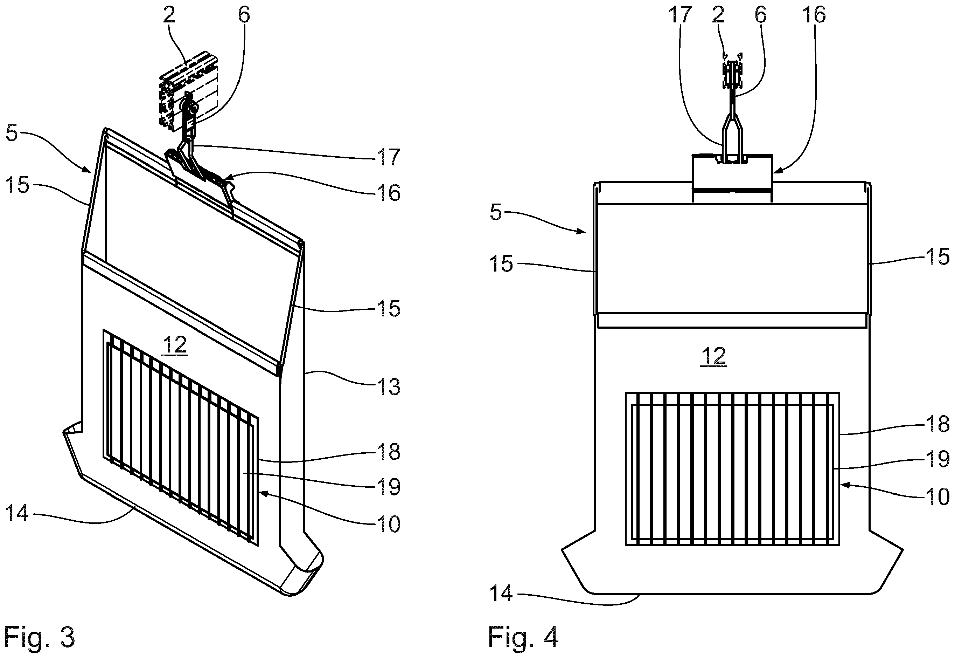

Nachfolgend wird der Aufbau der Transporttasche 5 anhand von Fig. 3 bis Fig. 8 näher erläutert. Die Transporttasche 5 weist eine vordere Seitenwand 12, eine hintere Seitenwand 13 und eine die vordere Seitenwand 12 mit der hinteren Seitenwand 13 verbindende Bodenwand 14 auf. Die vordere Seitenwand 12, die hintere Seitenwand 13 und die Bodenwand 14 sind aus einem einheitlichen, flexiblen Taschenmaterial ausgeführt. In einem oberen, der Bodenwand 14 jeweils gegenüberliegenden Bereich sind die vordere Seitenwand 12 und die hintere Seitenwand 13 an zwei gegenüberliegenden Bügeln 15 befestigt. Die hintere Seitenwand 13 weist eine Kopplungseinheit 16 mit einem Hakenelement 17 zum Einhaken an dem Adapterelement 6 auf. Das Adapterelement 6 ist insbesondere ein Rolladapter, der eine Fördereinheit darstellt.

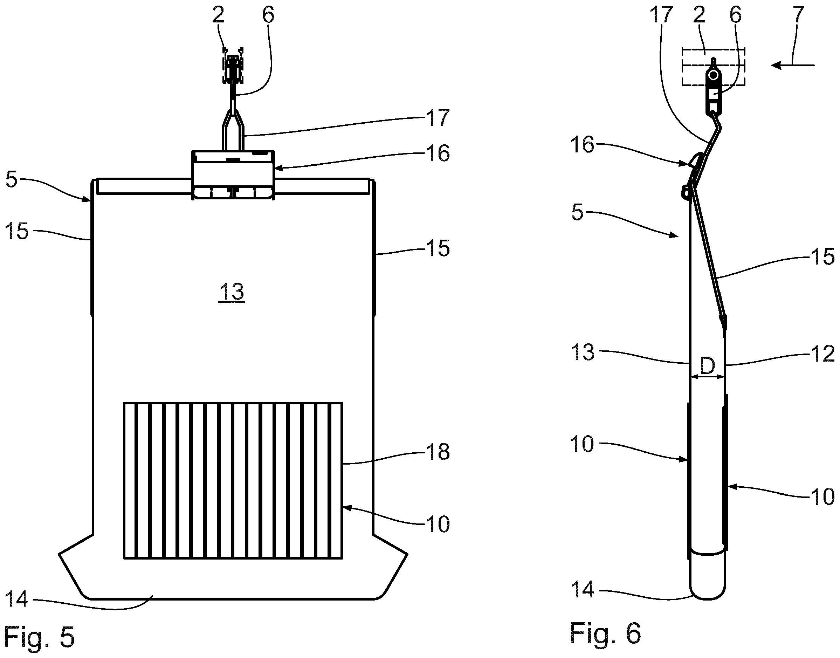

Im Bereich der Bodenwand 14 weist die Transporttasche 5 seitliche Ausgleichselemente 18 auf, die ein Aufweiten der Tasche in Dickenrichtung ermöglichen. Die Dicke D der Transporttasche 5 im unbeladenen Ausgangszustand ist in Fig. 6 dargestellt. Die Haftkontaktflächen 10 sind bei der Transporttasche 5 an jeweils einer Außenseite der vorderen Seitenwand 12 und der hinteren Seitenwand 13 angeordnet. Die Haftkontaktflächen 10 sind gemäß dem gezeigten Ausführungsbeispiel als Reibbelag aus PVC-P ausgeführt. Die Haftkontaktflächen 10 an der vorderen Seitenwand 12 und der hinteren Seitenwand 13 sind insbesondere identisch ausgeführt und unterscheiden sich insbesondere lediglich hinsichtlich ihrer Positionierung an der vorderen Seitenwand 12 und der hinteren Seitenwand 13.

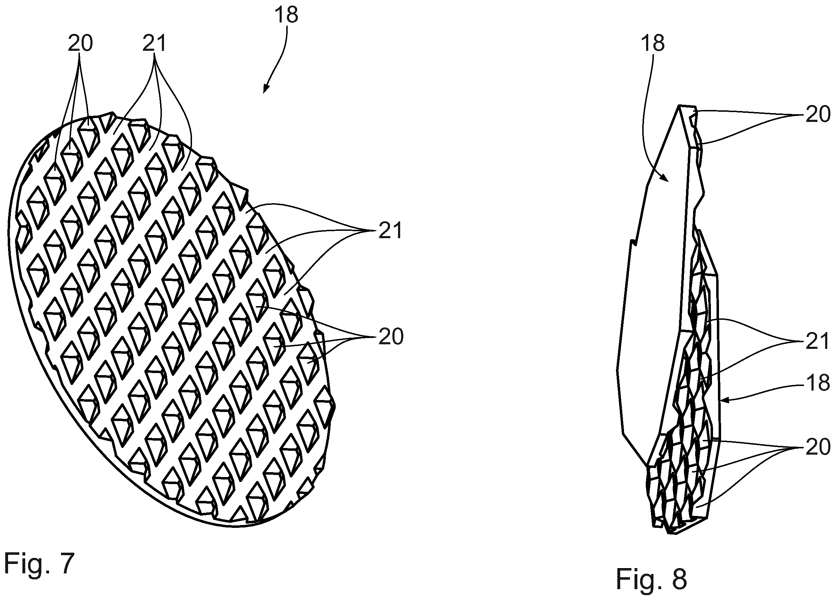

Um die Haftung zwei benachbarter Haftkontaktflächen 10 zu verbessern, weisen die Reibbeläge 18 jeweils eine Oberflächenstrukturierung auf, die in Fig. 7 und 8 näher dargestellt ist. Die Oberflächenstrukturierung der Haftkontaktfläche 10 kann beispielweise auch dadurch ausgeführt sein, dass die Haftkontaktfläche 10 wellig, konkav oder konvex ausgeführt ist.

Insbesondere an der vorderen Seitenwand 12 ist unterhalb der Haftkontaktfläche 10, also unterhalb des Reibbelags 18, eine Aussteifungsplatte, die gemäß dem gezeigten Ausführungsbeispiel als Polypropylen-Hohlkammer-Stegplatte ausgeführt ist, angeordnet. Die Größe der Aussteifungsplatte 19 entspricht im Wesentlichen der Größe des Reibbelags 18, sodass der Reibbelag 18 im Wesentlichen vollflächig durch die Aussteifungsplatte 19 ausgesteift ist. Gemäß dem gezeigten Ausführungsbeispiel weist die Aussteifungsplatte 19 eine Breite von 200 mm und eine Höhe von 300 mm auf. Die rechteckförmige Fläche der Aussteifungsplatte 19, die durch deren Höhe und Breite festgelegt ist, ist insbesondere geringfügig kleiner, als die Fläche des Reibbelags 18, also der Haftkontaktfläche. Dadurch ist gewährleistet, dass die Aussteifungsplatte 19 vollständig vom Reibbelag 18 abgedeckt ist.

Die Aussteifungsplatte 19 weist eine Dicke von 3,0 mm auf.

Die Abmessungen der Aussteifungsplatte 19 und/oder des Reibbelags 18 können auch größer oder kleiner gewählt werden. Insbesondere sind die Abmessungen der Aussteifungsplatte 19 und/oder des Reibbelags 18 an die Größe der Transporttasche, also die Höhe und Breite der Seitenwände 12, 13, angepasst.

Fig. 7 zeigt eine Ausschnittsvergrößerung des Reibbelags 18 mit einer Vielzahl von pyramidenförmigen Erhebungen 20. Die Erhebungen 20 sind rasterförmig in Zeilen und Spalten angeordnet. Sowohl in Zeilen- als auch in Spaltenrichtung ist jeweils ein Zwischenraum 21 zwischen den Erhebungen 20 gebildet. Die Zwischenräume 21 bilden Vertiefungen zwischen den Erhebungen 20. Die Haftung aneinander anliegender Transporttaschen 5 in einer Staustrecke 1 kann dadurch verbessert werden, indem die Erhebungen 20 der einen Haftkontaktfläche in die Zwischenräume 21 der Haftkontaktfläche 10 der benachbarten Transporttasche eingreifen (vgl. Fig. 8). Die Haltekraft bzw. Haftkraft der aneinander anliegenden Transporttaschen ist dadurch erhöht. Die Zwischenräume 21 können eine Breite von 0,5 mm bis 1 mm und eine Tiefe von etwa 0,5 mm aufweisen. Im Bereich der Haftkontaktfläche 10 beträgt die Materialdicke der Transporttasche 5 etwa 1,5 mm. In diesem Bereich ist die Transporttasche 5 mehrlagig ausgeführt, mit der außen liegend angeordneten Haftkontaktfläche 10 des Reibbelags 18, der darunter angeordneten Aussteifungsplatte 19 und dem darunter angeordneten Taschenmaterial. Das Taschenmaterial ist ein flexibles Textilgewebe.

Sofern insbesondere genau eine Erhebung und/oder genau eine Vertiefung an der Haftkontaktfläche vorgesehen sind, können deren Breite und Höhe beispielsweise mehrere Millimeter, insbesondere zwischen 5 mm und 50 mm betragen. Entsprechend ist die Breite der langlochförmigen Vertiefung ausgebildet.

Das Material, das die Haftkontaktfläche 10 aufweist, weist insbesondere Rückstelleigenschaften auf, ist also insbesondere vollständig elastisch, sodass nach der Entnahme der Transportwaren 8 aus der Transporttasche 5 diese wieder die Ausgangsform gemäß dem unbeladenen Ausgangszustand einnimmt.

Der Reibbelag 18 ist insbesondere aus einem Elastomermaterial hergestellt. Es ist auch denkbar, die Aussteifungsplatte 19 in den Reibbelag 18 zu integrieren, in dem die Aussteifungsplatte 19 von dem Material des Reibbelags 18 umspritzt wird.

## Patentansprüche

1. Transporttasche für eine Hängeförderanlage umfassend
a. eine vordere Seitenwand (12),
b. eine hintere Seitenwand (13),
c. eine die vordere Seitenwand (12) mit der hinteren Seitenwand (13) verbindende Bodenwand (14),
**dadurch gekennzeichnet, dass** an einer Außenseite der vorderen Seitenwand (12) und/oder an einer Außenseite der hinteren Seitenwand (13) bereichsweise eine Haftkontaktfläche (10) zum Verhindern einer seitlichen Verlagerung zwei aneinander anliegender Transporttaschen (5) vorgesehen ist, wobei die Haftkontaktfläche (10) einen Reibbelag (18) aus einem Reibmaterial aufweist.

2. Transporttasche gemäß Anspruch 1, **dadurch gekennzeichnet, dass** der Reibbelag (18) einen hohen Reibwert aufweist, der mindestens 0,6, insbesondere mindestens 0,8 und insbesondere mindestens 1,0 beträgt.

3. Transporttasche gemäß Anspruch 1 oder 2, **dadurch gekennzeichnet, dass** der Reibbelag (18) auf die vordere Seitenwand (12) und/oder auf die hintere Seitenwand (13) aufgesetzt oder darin integriert ist.

4. Transporttasche gemäß einem der Ansprüche 1 bis 3, **dadurch gekennzeichnet, dass** der Reibbelag (18) flammhemmend und insbesondere halogenfrei ausgeführt ist.

5. Transporttasche gemäß einem der vorstehenden Ansprüche, **dadurch gekennzeichnet, dass** die Haftkontaktfläche (10) mindestens eine Erhebung und/oder mindestens eine Vertiefung aufweist.

6. Transporttasche gemäß einem der vorstehenden Ansprüche, **gekennzeichnet durch** eine Aussteifungsplatte (19), die insbesondere im Bereich der Haftkontaktfläche (10) angeordnet ist.

7. Transporttasche gemäß Anspruch 6, **dadurch gekennzeichnet, dass** die Transporttasche (5) zumindest abschnittsweise mehrlagig ausgeführt ist, wobei entlang der Dicke der vorderen Seitenwand (12) und/oder der hinteren Seitenwand (13) die Haftkontaktfläche (10) und die Aussteifungsplatte (19) hintereinander angeordnet sind.

8. Transporttasche gemäß Anspruch 6 oder 7, **dadurch gekennzeichnet, dass** die Aussteifungsplatte (19) eine Biegesteifigkeit aufweist, die größer ist als die der Haftkontaktfläche (10) und/oder des Taschenmaterials.

9. Transporttasche gemäß einem der Ansprüche 6 bis 8, **dadurch gekennzeichnet, dass** die Aussteifungsplatte (19) als PP-Hohlkammer-Stegplatte oder als Wellpappe ausgeführt ist.

10. Transporttasche gemäß einem der Ansprüche 6 bis 9, **dadurch gekennzeichnet, dass** die Aussteifungsplatte (19) vollständig von der Haftkontaktfläche (10) abgedeckt ist.

11. Transporttasche gemäß einem der vorstehenden Ansprüche, **dadurch gekennzeichnet, dass** eine vordere Haftkontaktfläche (10) an der vorderen Seitenwand (12) und eine hintere Haftkontaktfläche (10) an der hinteren Seitenwand (13) vorgesehen ist, wobei die vordere Haftkontaktfläche (10) und die hintere Haftkontaktfläche (10) im Wesentlichen, insbesondere vollständig, identisch ausgeführt sind.

12. Transporttasche gemäß einem der vorstehenden Ansprüche, **dadurch gekennzeichnet, dass** die Haftkontaktfläche (10) mindestens ein Haftelement aufweist, das mit einem Gegenhaftelement einer anliegenden Transporttasche (5) durch Formschluss und/oder Kraftschluss lösbar haftbar verbindbar ist, wobei das Haftelement und das Gegenhaftelement insbesondere magnetisch oder als Klettverschluss ausgebildet sind.

13. Transporttasche gemäß einem der vorstehenden Ansprüche, **dadurch gekennzeichnet, dass** die vordere Seitenwand (12) und die hintere Seitenwand (13) an jeweils einem der Bodenwand (14) gegenüberliegenden freien Ende mit mindestens einem Bügel (15) unmittelbar verbunden sind.

14. Transporttasche gemäß einem der vorstehenden Ansprüche, **gekennzeichnet durch** eine Kopplungseinheit (16) zum Ankoppeln an eine Fördereinheit, insbesondere einen Rolladapter (6), der Hängeförderanlage.

## Claims

1. Transport bag for an overhead conveyor, the transport bag comprising
a. a front side wall (12);
b. a rear side wall (13);
c. a bottom wall (14) interconnecting the front side wall (12) with the rear side wall (13),
**characterized in that** an adherent contact surface (10) is partly provided on an outer side of the front side wall (12) and/or on an outer side of the rear side wall (13) to prevent a lateral displacement of two transport bags (5) abutting against each other, wherein the adherent contact surface (10) has a friction layer (18) made of a friction material.

2. Transport bag according to claim 1, **characterized in that** the friction layer (18) has a high coefficient of friction that amounts to at least 0.6, in particular at least 0.8, and in particular to at least 1.0.

3. Transport bag according to claim 1 or 2, **characterized in that** the friction layer (18) is attached to or is integrated in the front side wall (12) and/or the rear side wall (13).

4. Transport bag according to any one of claims 1 to 3, **characterized in that** the friction layer (18) is flame-inhibiting and in particular halogen-free.

5. Transport bag according to any one of the preceding claims, **characterized in that** the adherent contact surface (10) has at least one elevation and/or at least one recess.

6. Transport bag according to any one of the preceding claims, **characterized by** a reinforcing plate (19) that is arranged in particular in the region of the adherent contact surface (10).

7. Transport bag according to claim 6, **characterized in that** at least part of the transport bag (5) has a multilayer design, wherein the adherent contact surface (10) and the reinforcing plate (19) are arranged one behind the other along the thickness of the front side wall (12) and/or the rear side wall (13).

8. Transport bag according to claim 6 or 7, **characterized in that** the reinforcing plate (19) has a bending stiffness that is greater than that of the adherent contact surface (10) and/or that of the bag material.

9. Transport bag according to any one of claims 6 to 8, **characterized in that** the reinforcing plate is configured as a PP hollow-chamber web plate or as a corrugated cardboard.

10. Transport bag according to any one of claims 6 to 9, **characterized in that** the reinforcing plate (19) is entirely covered by the adherent contact surface (10).

11. Transport bag according to any one of the preceding claims, **characterized in that** a front adherent contact surface (10) is provided on the front side wall (12) while a rear adherent contact surface (10) is provided on the rear side wall (13), wherein the front adherent contact surface (10) and the rear adherent contact surface (10) are configured substantially, in particular entirely, identical.

12. Transport bag according to any one of the preceding claims, **characterized in that** the adherent contact surface (10) has at least one adherent element that is adherently connectable, by means of a positive fit and/or a non-positive fit, with a counter adherent element of a transport bag (5) abutting thereagainst in such a way as to be removable, wherein the adherent element and the counter adherent element are in particular magnetic or configured as a hook-and-loop fastener.

13. Transport bag according to any one of the preceding claims, **characterized in that** on a respective free end opposite to the bottom wall (14), the front side wall (12) and the rear side wall (13) are directly connected by means of at least one carrier frame (15).

14. Transport bag according to any one of the preceding claims, **characterized by** a coupling unit (16) to be coupled to a conveyor unit, in particular a roll adapter (6), of the overhead conveyor.

## Revendications

1. Sac de transport pour un système de transport suspendu comprenant
a. une paroi latérale avant (12),
b. une paroi latérale arrière (13),
c. une paroi inférieure (14) reliant la paroi latérale avant (12) à la paroi latérale arrière (13),
**caractérisé en ce qu'**une surface de contact adhésive (10) destinée à empêcher le déplacement latéral de deux poches de transport adjacentes (5) est prévue par endroits sur un côté extérieur de la paroi latérale avant (12) et/ou sur un côté extérieur de la paroi latérale arrière (13), la surface de contact adhésive (10) ayant une garniture de friction (18) en un matériau de friction.

2. Sac de transport selon la revendication 1, **caractérisé en ce que** la garniture de friction (18) présente un coefficient de friction élevé, d'au moins 0,6, en particulier d'au moins 0,8 et notamment d'au moins 1,0.

3. Sac de transport selon la revendication 1 ou 2, **caractérisé en ce que** la garniture de friction (18) est montée sur la paroi latérale avant (12) et/ou sur la paroi latérale arrière (13) ou intégrée dans celle-ci.

4. Sac de transport selon l'une des revendications 1 à 3, **caractérisé en ce que** la garniture de friction (18) est de conception ignifuge et en particulier exempte d'halogène.

5. Sac de transport selon l'une des revendications précédentes, **caractérisé en ce que** la surface de contact adhésive (10) présente au moins une élévation et/ou au moins un évidement.

6. Sac de transport selon l'une des revendications précédentes, **caractérisé par** une plaque de renforcement (19) agencée en particulier dans la région de la surface de contact adhésive (10).

7. Sac de transport selon la revendication 6, **caractérisé en ce que** le sac de transport (5) est réalisé en plusieurs couches au moins par sections, la surface de contact adhésive (10) et la plaque de renforcement (19) étant disposées l'une derrière l'autre le long de l'épaisseur de la paroi latérale avant (12) et/ou de la paroi latérale arrière (13).

8. Sac de transport selon la revendication 6 ou 7, **caractérisé en ce que** la plaque de renforcement (19) présente une résistance à la flexion supérieure à celle de la surface de contact adhésive (10) et/ou du matériau du sac.

9. Sac de transport selon l'une des revendications 6 à 8, **caractérisé en ce que** la plaque de renforcement (19) est conçue sous forme de plaque de traverse à chambre creuse en PP ou de carton ondulé.

10. Sac de transport selon l'une des revendications 6 à 9, **caractérisé en ce que** la plaque de renforcement (19) est entièrement recouverte par la surface de contact adhésive (10).

11. Sac de transport selon l'une des revendications précédentes, **caractérisé en ce qu'**une surface de contact adhésive avant (10) est prévue sur la paroi latérale avant (12) et une surface de contact adhésive arrière (10) est prévue sur la paroi latérale arrière (13), la surface de contact adhésive avant (10) et la surface de contact adhésif arrière (10) étant sensiblement, en particulier complètement, identiques.

12. Sac de transport selon l'une des revendications précédentes, **caractérisé en ce que** la surface de contact adhésive (10) présente au moins un élément d'adhérence qui peut être relié de manière amovible et adhésive à un élément de contre-adhérence d'un sac de transport adjacent (5) par engagement positif et/ou par adhérence, l'élément d'adhérence et l'élément de contre-adhérence étant réalisés en particulier de façon magnétique ou sous forme d'une fermeture auto-agrippante.

13. Sac de transport selon l'une des revendications précédentes, **caractérisé en ce que** la paroi latérale avant (12) et la paroi latérale arrière (13) sont directement reliées à au moins un support (15) à une extrémité libre respective opposée à la paroi inférieure (14).

14. Sac de transport selon l'une des revendications précédentes, **caractérisé par** une unité de couplage (16) pour le couplage à une unité de transport, en particulier un adaptateur à rouleaux (6) du système de transport suspendu.
